# EUROPÄISCHE PATENTSCHRIFT

(11) **EP 1 645 458 B1**
(45) Veröffentlichungstag und Bekanntmachung des Hinweises auf die Patenterteilung: **07.11.2007**
(21) Anmeldenummer: 05015423.6
(22) Anmeldetag: 15.07.2005
(51) Int. Cl.: B60N 2/06, B60N 2/02

(54) **Getriebe und Fahrzeugsitz mit einem solchen Getriebe**
Gear and vehicle seat with such a gear
Réducteur et siège de véhicule comportant un tel réducteur

(30) Priorität: 21.09.2004 DE 102004046048
(43) Veröffentlichungstag der Anmeldung: 12.04.2006
(73) Patentinhaber: IMS Gear GmbH, 79871 Eisenbach (DE)
(72) Erfinder: Hofschulte, Wolfram, 79848 Bonndorf (DE); Knöpfle, Urban, 79822 Titisee-Neustadt (DE); Schulte, Olav, 70195 Stuttgart (DE)
(74) Vertreter: Patentanwälte Westphal, Mussgnug & Partner

(56) Entgegenhaltungen:
- EP-A- 0 359 008
- EP-A- 0 979 750
- EP-B- 1 068 093
- WO-A-02/070299
- DE-A1- 1 755 740
- DE-A1- 10 308 028
- US-A- 4 802 374

## Beschreibung

EP 0 979 750 A2 beschreibt einen Fahrzeugsitz mit einer Verstellvorrichtung, die eine Spindel und eine zugeordnete Spindelmutter aufweist. Die Spindel ist drehfest an einem ersten verstellelement der Verstellvorrichtung fixiert. Die Spindelmutter ist drehbar in einem zweiten Verstellelement gelagert, wobei das zweite Verstellelement mit dem ersten Verstellelement in Art einer Schienenführung gelagert ist. Die Spindelmutter bildet mit ihrem Außenmantel ein Schneckenrad aus, welches mit einer Schnecke eines Drehantriebs verbunden ist. Die Anordnung dient dazu, einen auf dem zweiten Verstellelement befestigten Fahrzeugsitz gegenüber dem ersten Verstellelement, welches mit einem Fahrzeugboden fest verbunden ist, zu verschieben. Nachteilhafterweise besteht die Anordnung aus einer Vielzahl von Einzelteilen, welche direkt in der durch die beiden Verstellelemente gebildeten Schienenanordnung anzuordnen und zu befestigen sind. Eine ggf. erforderlich werdende Reparatur macht daher einen großen Aufwand erforderlich.

US 4,802,374 beschreibt einen Verstellantrieb für einen Fahrzeugsitz, bei dem eine derartige Spindel mit einer ein Verstellelement ausbildenden Fahrzeug-Sitzschiene drehfest verbunden ist. Die Spindel ist jedoch außerhalb der Schienenführung befestigt, was von Fahrzeugherstellern als unerwünscht angesehen wird. Eine andere Sitzverstelleinrichtung mit selbsthemmendem Verstellantrieb für Fahrzeugsitze ist aus DE 1 755 740 bekannt. Auch bei dieser Anordnung befindet sich eine Vielzahl von Komponenten neben einer Schienenführung.

Eine aufwändig konstruierte Getriebeanordnung zum Verstellen eines Fahrzeugsitzes ist außerdem aus WO 02/070299 A1 bekannt. Bei dieser Anordnung wird ein aufwändig konstruiertes Getriebe beschrieben, welches im Fall eines Unfalls auftretende Kräfte aufnehmen können soll.

Aus EP 1 068 093 B1 ist ein Getriebe, wie in Fig. 3 dargestellt; zum verstellen zweier zueinander verstellbarer Teile 60, 61, insbesondere Fahrzeug-Teile einer Sitzverstelleinrichtung, eines Fensterhebers oder eines Schiebedachs bekannt, wobei das erste der Teile 60 eine mit einem Fahrzeugboden fest verbundene Unterschiene ausbildet, in welcher eine drehfeste Spindel 62 oder eine feste Zahnstange aufgenommen ist. Das Getriebe 6 sitzt auf der Spindel 62 und wird bei Betätigung längs der Spindel 62 hin und her verstellt. Das Getriebe 6 ist in einer Halterung 63 aufgenommen, welche zusammen mit dem zweiten der verstellbaren Teile 61 hin und her verstellt wird. Die Halterung 63 ist fest mit dem zweiten der zueinander verstellbaren Teile 61 verbunden, welches eine Oberschiene ausbildet, welche verstellbar mit der Unterschiene verbunden ist. Über eine Halteplatte 64 ist die Oberschiene mit weiteren Komponenten des Fahrzeugsitzes verbunden. Außerdem ist an der Halteplatte 64 über Befestigungselemente 65 ein Antrieb 66 befestigt, dessen Antriebswelle 67 mit einer antreibbaren Schnecke des Getriebes 6 verbunden ist.

Das Getriebe 6 besteht aus einem Schneckenrad, das eine dazu drehfeste Spindelmutter zum Antreiben der Spindel oder eine dazu drehfeste Schnecke zum Antreiben der Zahnstange aufweist, aus einer antreibbaren Schnecke zum Übertragen einer Antriebskraft des Antriebs auf das Schneckenrad und aus einem Getriebegehäuse, das die Schnecke und das Schneckenrad gelagert aufnimmt und das mit dem zweiten der verstellbaren Teile 61 in dessen Verstellrichtung verstellfest verbunden ist. Das Getriebegehäuse besteht dabei aus einer Vielzahl, insbesondere aus wenigstens zwei mittels Steckverbindungen aneinander befestigbaren Gehäuseplatten. Mittels der Steckverbindungen ist die Lage der Gehäuseplatten zueinander in allen Raumrichtung fixiert, wobei die Steckverbindungen gleichzeitig als tragende, die Getriebekräfte aufnehmende Verbindungsstellen ausgebildet sind. Im Falle nur zweier Gehäuseplatten besteht das Getriebegehäuse aus zwei L-förmigen Gehäuseplatten. Im Fall von zumindest vier Bauelementen besteht das Getriebegehäuse aus wenigstens zwei Paaren einander gegenüberliegender scheibenförmiger Gehäuseplatten, wobei es sich in jedem Fall um eine aufwändige Getriebeanordnung handelt, welche zusätzlich neben den eigentlichen Gehäuseteilen eine Vielzahl von weiteren Lagerelementen oder Lagerunterstützungselementen, wie Unterlegscheiben, erforderlich macht. Neben dem aufwändigen Zusammenbau einer Vielzahl von Einzelteilen ist auch nachteilhaft, dass die Toleranzen der einzelnen Einzelteile zueinander abgestimmt werden müssen. Die einzelnen Gehäuseteile eines solchen Getriebegehäuses werden miteinander verschweißt.

Weiterhin bekannt ist die Bereitstellung von zwei einzelnen Druckgehäuseteilen, welche mit einer Spindelmutter, Mitnehmerscheiben und Lagerbuchsen sowie einer Schnecke und zugehörigen Lagerbuchsen bestückt und anschließend durch plastisches Verformen von Steckverbindungen der Gehäusehälften verschlossen werden.

Die Aufgabe der Erfindung besteht darin, ein Getriebe zum Verstellen zweier zueinander verstellbarer Teile, insbesondere Fahrzeugteile einer Sitzverstelleinrichtung zu vereinfachen. Insbesondere soll die erforderliche Teileanzahl reduziert werden und ein einfacher Zusammenbau bzw. Austausch von Getriebeteilen ermöglicht werden.

Diese Aufgabe wird durch ein Getriebe zum Verstellen zweier zueinander verstellbarer Teile mit den Merkmalen des Patentanspruchs 1 gelöst. Gegenstand des Patentanspruchs 11 ist ein Spindel- oder Schneckenantrieb mit einem solchen Getriebe. Gegenstand des Patentanspruchs 12 ist ein Fahrzeugsitz mit einem solchen Getriebe.

Bevorzugt wird demgemäss ein Getriebe zum Verstellen zweier zueinander verstellbarer Teile, insbesondere Fahrzeug-Teile einer Sitzverstelleinrichtung, eines Fensterhebers oder eines Schiebedachs, wobei das erste der Teile eine drehfeste Spindel oder eine feste Zahnstange aufweist und wobei das Getriebe ausgebildet ist mit einem Schneckenrad, das eine dazu drehfeste Spindelmutter zum Antreiben der Spindel oder eine dazu drehfeste Schnecke zum Antreiben der Zahnstange aufweist, mit einer antreibbaren Schnecke zum Übertragen einer Antriebskraft auf das Schneckenrad und mit einem Getriebegehäuse, das die Schnecke und das Schneckenrad gelagert aufnimmt und das mit dem zweiten der Teile in dessen verstellrichtung verstellfest verbindbar ist, wobei das Getriebegehäuse aus einem einteiligen Körper ausgebildet ist mit einem Schneckenlager und einem Schneckenradlager. Das Schneckenlager ist in einer oder zwei gegenüberliegenden Wandungen als insbesondere Seitenwandungen des Getriebegehäuses, insbesondere im oberseitigen Abschnitt des Getriebegehäuses, ausgebildet und weist in Einsetzrichtung der Schnecke eine Schneckenlager-Zugangsöffnung auf, wobei die Schneckenlager-Zugangsöffnung durch die entsprechende Seitenwandung bis zu der Unterseite der Seitenwandung und/oder des Getriebegehäuses hindurchführt.

Vorteilhafte Ausgestaltungen sind Gegenstand abhängiger Ansprüche.

Bevorzugt wird ein Getriebe, bei dem die Schneckenlager-Zugangsöffnung oder ein Abschnitt im Übergangsbereich zwischen der Schneckenlager-Zugangsöffnung und dem Schneckenlager einen geringeren Abstand als ein Durchmesser eines Schneckenschafts der Schnecke aufweist.

Bevorzugt wird ein Getriebe, bei dem das Schneckenradlager in einer oder zwei gegenüberliegenden Wandungen, insbesondere unterhalb der oberseitigen Schnecke, ausgebildet ist und eine Schneckenradlager-Zugangsöffnung aufweist, wobei die Schneckenradlager-Zugangsöffnung durch eine entsprechende Seitenwandung bis zu der Unterseite der Seitenwandung und/oder des Getriebegehäuses hindurchführt.

Bevorzugt wird ein solches Getriebe, bei dem die schneckenradlager-Zugangsöffnung oder ein Abschnitt im Übergangsbereich zwischen der Schneckenradlager-Zugangsöffnung und dem Schneckenradlager einen geringeren Abstand als ein Durchmesser eines Schneckenradschafts des Schneckenrads aufweist.

Bevorzugt wird ein Getriebe, bei dem die Seitenwandungen mit dem Schneckenlager zwischen den Seitenwandungen mit dem Schneckenradlager ausgebildet sind. In einfacher Ausgestaltung werden durch die Seitenwandungen mit dem Schneckenradlager Stirnseiten eines Gehäuses und durch die Seitenwandungen mit dem Schneckenlager die beiden Wandungen zwischen den Stirnseiten ausgebildet. In Draufsicht bilden diese vier Wandungen somit Seitenwandungen eines quadratischen oder quaderförmigen Gehäuses aus. Möglich sind aber auch Ausgestaltungen, bei denen zwei der gegenüberliegenden Wandungen zu den beiden anderen Wandungen unter einem Winkel zwischen einer Schneckenachse und einer Schneckenradachse verlaufen, wobei der Winkel theoretisch zwischen 1 und 179° liegen kann.

Bevorzugt wird ein Getriebe, bei dem die Seitenwandungen im unterseitigen Abschnitt des Getriebegehäuses aus zueinander beabstandeten Beinen ausgebildet sind, wobei die Abstände zweier benachbarter Beine als Schneckenlager-Zugangsöffnungen zum Durchführen eines Schneckenschafts und/oder als Schneckenradlager-Zugangsöffnungen zum Durchführen eines Schneckenradschafts breit genug und/oder elastisch genug dimensioniert sind.

Bevorzugt wird ein solches Getriebe mit einem Gehäuseverschlussteil zum unterseitigen Verschließen des Getriebegehäuses, wobei das Gehäuseverschlussteil die Beine nach dem Einsetzen des Gehäuseverschlussteils aneinander festlegt. Umsetzbar ist insbesondere ein solches Gehäuseverschlussteils in Form einer umfassenden Wanne oder in Form einer gestifteten Bauweise.

Bevorzugt wird ein Getriebe mit einem Gehäuseverschlussteil zum unterseitigen Verschließen des Getriebegehäuses, wobei das Gehäuseverschlussteil das Schneckenrad und/oder die Schnecke in dem Getriebegehäuse unterseitig lagert.

Bevorzugt wird ein Getriebe, bei dem zumindest eine innenseitige Seitenwandung zu der Schneckenlager-Zugangsöffnung hin und/oder zu der Schneckenradlager-Zugangsöffnung hin eine Einführungsabschrägung aufweist.

Aufbau und Montage eines derartigen Getriebes werden demgemäss vorteilhaft vereinfacht. Im einfachsten Fall erfolgt dies durch eine Reduzierung auf drei hervorzuhebende Bauteile, nämlich einen einstückigen Getriebeblock als Getriebegehäuse, eine Schnecke und eine Spindelmutter. Schnecke und Spindelmutter können dabei in für sich bekannter Ausführung verwendet werden, wobei die Spindelmutter insbesondere eine globoidische Verzahnung mit zylindrischem Anteil aufweist. Der Getriebeblock kann beispielsweise als Kunststoffspritzgießteil mit entsprechend angeformten Aufnahmen für Verzahnungsteile des Getriebes auf einfache Art und Weise und zugleich kostengünstig bereitgestellt werden. Die einzelnen Bauteile, d. h. insbesondere Schnecke und Spindelmutter, werden über die entsprechenden Aufnahmeeinrichtungen bzw. Zuführungseinrichtungen zu deren Lagern in den Getriebeblock eingesetzt und darin per Schnapp- bzw. Rastverbindung um deren jeweilige Längsachse drehbar gelagert. Gemäß einer bevorzugten Ausführungsform wird ein Getriebedeckel als Gehäuseverschlussteil von unten in entsprechende Rastaufnahmen eingeschnappt, um die Kombination aus Schneckenrad und Spindelmutter im Getriebegehäuse zu sichern.

Bevorzugt wird der Einsatz eines derart sehr klein dimensionierbaren Getriebes zwischen zwei Sitzschienen als den relativ zueinander verstellbaren Teilen eines Fahrzeugsitzes. Prinzipiell ist jedoch die Anwendung in verschiedenen Anwendungen von Schneckengetrieben umsetzbar.

Ein Ausführungsbeispiel wird nachfolgend anhand der Zeichnung näher erläutert. Es zeigt:
- Fig. 1: ein Getriebegehäuse mit eingesetzter Schnecke und eingesetztem Schneckenrad gemäß einem besonders bevorzugten Ausführungsbeispiel;
- Fig. 2: die Elemente der Anordnung aus Fig. 1 in auseinandergezogener Darstellung; und
- Fig. 3: schematisch einzelne Elemente eines Fahrzeugsitz-Gestells und einer Schienenführung mit einem Getriebe gemäß dem Stand der Technik.

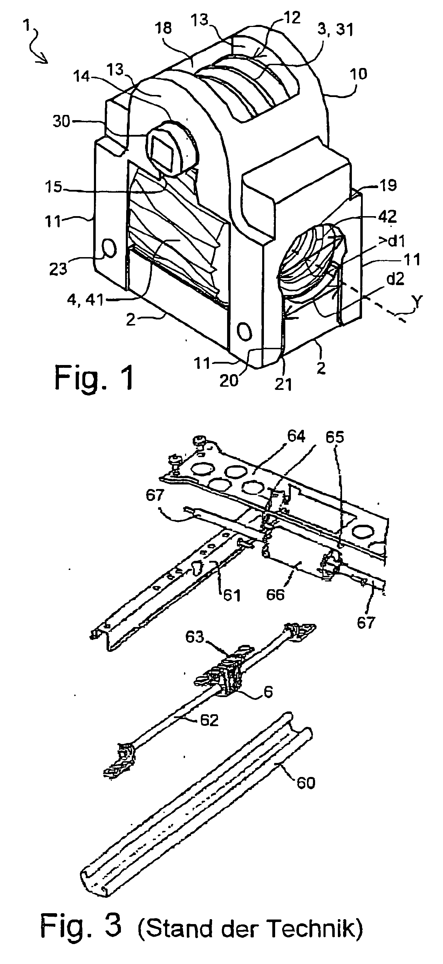

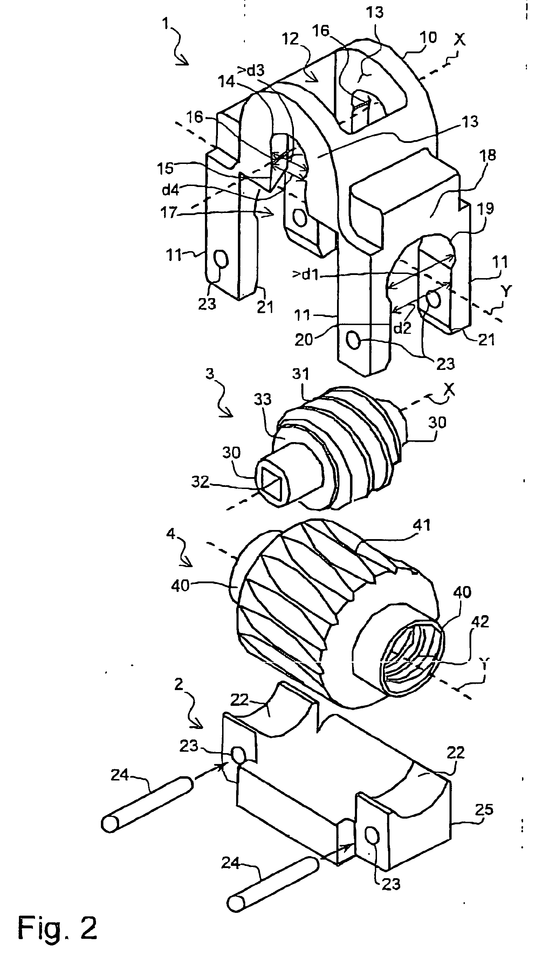

Fig. 1 und 2 zeigen in zusammengesetzter bzw. in auseinandergezogener Darstellung ein Getriebe und dessen Komponenten gemäß einer besonders bevorzugten Ausführungsform. Ein einstückiges Getriebegehäuse 1 dient zur Aufnahme sowohl einer Schnecke 3 als auch eines Schneckenrads 4. Optional ist die Anordnung von der Unterseite her durch ein Gehäuseverschlussteil 2 bzw. einen Gehäusedeckel verschließbar.

Das Getriebegehäuse 1 besteht aus einem Oberteil 10, an dessen unterseitigen Eckbereichen Beine 11 bzw. stegförmige Ausleger nach unten hin gerichtet angeformt sind. Die Raumrichtungen oben und unten dienen vorliegend lediglich zur anschaulichen Beschreibung, da das zusammengesetzte Getriebe letztendlich in beliebigen Raumrichtungen in einer Antriebseinrichtung einsetzbar ist.

Zur Lagerung der Schnecke 3 bildet das Oberteil 10 des Getriebegehäuses 1 einen Aufnahme- bzw. Schneckenraum 12 aus. Die Schnecke 3 besteht in für sich bekannter Art und Weise aus einem Schneckenschaft 30 und einer Schnecken-Verzahnung 31, welche im zentralen mittleren Bereich des Schneckenschafts 30 um diesen herum ausgebildet ist. Ein Ende des Schneckenschafts 30 weist vorzugsweise eine Antriebswellenaufnahme 32 auf, welche zur Befestigung einer Antriebswelle an dem Schneckenschaft 30 dient, so dass die Schnecke 3 in Rotation um ihre Längsachse X versetzbar ist. Vor dem Einsetzen der Schnecke 3 in den Schneckenraum 12 werden vorzugsweise ringförmige Lagerscheiben 33 auf die beiden Schneckenschaftenden 30 aufgesetzt, welche beidseitig der Schnecken-Verzahnung 31 aus der Schnecke 3 herausragen. Dies ist jedoch nicht zwingend erforderlich und kann im Fall beispielsweise einer globoidischen Verzahnung mit zylindrischem Anteil entfallen.

In zwei zueinander gegenüberliegenden ersten Seitenwandungen 13 des den Schneckenraum 12 ausbildenden Oberteils 1 des Getriebegehäuses 1 sind Schneckenlager 14 ausgebildet. Zumindest eines der Schneckenlager 14'ist dabei als Durchgangsöffnung durch die entsprechende erste Seitenwandung 13 ausgebildet, um den Durchtritt des entsprechenden Schneckenschafts 30 und/oder der Antriebswelle, welche an diesem befestigt ist, durch die erste Seitenwandung 13 zu ermöglichen. Der offene Durchmesser der Schneckenlager 14 ist dabei größer als ein Durchmesser d3 des Schneckenschafts 30. Vorzugsweise wird dabei jedoch so wenig wie möglich Spiel zugelassen.

Zum Einsetzen der Schnecke 3 in die Schneckenlager 14 ist in den beiden ersten Seitenwandungen 13 jeweils eine Schneckenlager-Zugangsöffnung 15 ausgebildet, welche sich von dem Schneckenlager 14 bis zur Unterseite des Oberteils 10 bzw. der entsprechenden ersten Seitenwandungen 13 erstreckt. Dies ermöglicht ein Einschieben der Schnecke 3 von der Unterseite her in das Schneckenlager 14, wobei die Enden des Schneckenschafts 30 durch die beiden entsprechenden Schneckenlager-Zugangsöffnungen 15 hindurchgeführt werden.

Zum Halten der Schnecke 3 in dem Schneckenraum 12 kann gemäß einfacher Ausführungsform von unten her das Schneckenrad 4 in das Getriebegehäuse 1 eingesetzt und in diesem so gelagert werden, dass die Schnecke 3 in dem Schneckenlager 14 sicher gelagert und durch das Schneckenrad nach unten abgestützt wird.

Gemäß der bevorzugten Ausführungsform weist jedoch die Wandung der Schneckenlager-Zugangsöffnung 15 einen quer, d. h. insbesondere parallel zur Schneckenachse X verlaufenden Steg als Haltesteg 16 auf. Ein offener Abstand d4 zwischen dem bzw. den Haltestegen 16 auf den beiden gegenüberliegenden Wandungen der Schneckenlager-Zugangsöffnung 15 ist dabei kleiner als der Durchmesser d3 des Schneckenschafts 30. Die Wandung des Getriebegehäuses 1 im Bereich zumindest der Schneckenlager-Zugangsöffnung 15 und/oder die Wandung des Schneckenschafts 30 bestehen aus einem elastischen Material, welches beim Einsetzen der Schnecke 3 durch die Schneckenlager-Zugangsöffnungen 15 in die Schneckenlager 14 nachgibt. Nach dem Einsetzen des Schneckenschafts 30 oberhalb des bzw. der Haltestege 16 ist der Schneckenschaft 30 mit seinen beiden Enden rotationsfähig in dem Schneckenlager 14 gelagert, wobei er nach unten hin durch die Haltestege 16 am Herausrutschen aus dem Schneckenlager 14 gehindert wird.

Das Schneckenrad 4 weist in für sich bekannter Art und Weise einen Schneckenradschaft 40 auf, der mit seinen beidseitigen Enden aus einer Schneckenrad-Verzahnung 41 herausragt. Das Schneckenrad 4 ist ausgebildet, um eine Schneckenradachse Y zu rotieren, wobei die Schneckenradachse Y zugleich die Rotationsachse einer Spindelmutter 42 ausbildet. Die Spindelmutter 42 wird durch eine innenseitige Verzahnung des als Hohlwelle ausgebildeten Schneckenradschafts 40 ausgebildet. Die Spindelmutter 42 dient zur Aufnahme einer Spindel, welche beim Einsatz des Getriebes in z. B. den Führungsschienen eines Fahrzeugsitzes mit einer entsprechend drehfest in einer der Schienen angeordneten Spindel in Eingriff gebracht wird. Bei einer Rotation des Schneckenrads 4 wird dadurch das Schneckenrad 4 längs der feststehenden Spindel hin und her bewegt. Zusammen mit dem Schneckenrad 4 wird das Getriebegehäuse 1, in welchem das Schneckenrad 4 aufgenommen ist, hin und her bewegt. Der Antrieb des Schneckenrads 4 erfolgt dabei über die oberseitig angeordnete Schnecke 3 und einer Antriebswelle, welche mit der Antriebswellenaufnahme 32 der Schnecke 3 in Verbindung steht.

Zum Einsetzen des Schneckenrads 4 weist das Getriebegehäuse 1 unterhalb des Oberteils 10 und unterhalb des Schneckenraums 12 einen Schneckenradraum 17 auf. Der Schneckenradraum 17 kann durch zwei oder mehr einander gegenüberliegende geschlossene wandungen oder bevorzugt durch die vier Beine 11 umgrenzt sein. Jeweils zwei einander benachbarte der Beine 11 bilden somit eine zweite Seitenwandung 18 aus. In jeder dieser zueinander gegenüberliegenden beiden zweiten Seitenwandungen 18 ist ein Schneckenradlager 19 ausgebildet. Der Durchmesser dieser Schneckenradlager 19 ist dabei gleich oder größer einem Außendurchmesser d1 des Schneckenradschafts 40, so dass der Schneckenradschaft 40 in den beiden Schneckenradlagern 19 um die Schneckenradachse Y rotierbar gelagert wird.

Zum Einsetzen des Schneckenrads 4 in die Schneckenradlager 19 ist in den beiden zweiten Seitenwandungen 1B eine Schneckenradlager-Zugangsöffnung 20 ausgebildet. Die Schneckenradlager-Zugangsöffnungen 20 erstrecken sich dabei von den beiden Schneckenradlagern 19 bis zur Unterseite der beiden zweiten Seitenwandungen 18 bzw. zur Unterseite des Getriebegehäuses 1, so dass das Schneckenrad 4 von unten her mit dem Schneckenradschaft 40 durch die Schneckenradlager-Zugangsöffnungen 20 nach oben hin in die Schneckenradlager 19 einsetzbar ist.

Damit das Schneckenrad 4 bzw. der Schneckenradschaft 40 nach unten hin in den Schneckenradlagern 19 abgestützt wird, ist ein Abstand d2 der Wandungen der Schneckenradlager-Zugangsöffnungen 20 vorzugsweise geringfügig kleiner als der Außendurchmesser des Schneckenradschafts 40 ausgebildet. Das Material der Wandung der Schneckenradlager-Zugangsöffnungen 20 und/oder das Material des Schneckenradschaftes 40 ist dabei derart elastisch, dass der Schneckenradschaft 40 entgegen der elastischen Kraft von unten her durch die Schneckenradlager-Zugangsöffnungen 20 in die Schneckenradlager 19 eingeschoben werden kann und nach dem Erreichen der Schneckenradlager 19 durch die zurückgestellten Wandungen in den Schneckenradlagern 19 nach unten hin sicher gelagert wird. Zur Erleichterung des Einschiebens des Schneckenradschafts 40 in die Schneckenradlager-Zugangsöffnungen 20 weisen diese eine nach unten hin und nach außen hin abgeschrägt verlaufende Wandung als Einführungsabschrägung 21 auf.

Zusätzlich oder alternativ kann ein Gehäusedeckel als ein Gehäuseverschlussteil 2 von unten her in das Getriebegehäuse 1 eingesetzt werden. Das Gehäuseverschlussteil 2 bildet dann einen Abschluss des ansonsten nach unten offenen Schneckenradraums 17. Die oberseitige Wandung des Gehäuseverschlussteils 2 ist vorzugsweise derart gerundet ausgebildet, dass der Schneckenradraum 17 einen ausreichenden Raum für die Schneckenrad-Verzahnung 41 bildet und dass die beiden Enden des Schneckenradschafts 40 auf entsprechend geformten Lagerflächen 22 lagern. Zum Fixieren des Gehäuseverschlussteils 2 in dem Getriebegehäuse 1 kann ein für sich bekannter Rastverschluss mit beispielsweise entsprechenden Rastelementen an den Beinen 11 des Getriebegehäuses 1 ausgebildet werden. Besonders bevorzugt werden jedoch Bolzenaufnahmen 23 zur Aufnahme von Befestigungsbolzen 24, wobei die Bolzenaufnahmen 23 als Durchgangsöffnungen durch sowohl die Beine 11 als auch eine seitliche Wandung 25 des Gehäuseverschlussteils 2 hindurchführen. Die Breite der seitlichen Wandungen 25 entspricht dabei vorzugsweise dem Abstand d2 der Wandungen der Schneckenradlager-Zugangsöffnungen 20, so dass der Schneckenradraum 17 zu den zweiten Seitenwandungen 18 hin nach Einsetzen des Schneckenrads 4 dicht abgeschlossen wird. Die Schneckenradachse Y verläuft insbesondere in einer Richtung senkrecht zur Schneckenachse X, wie dies für sich bekannt ist.

Gemäß einer alternativen Ausführungsform kann anstelle eines Schneckenrads 4 mit einer integrierten Spindelmutter 42 auch ein Schneckenrad 4 mit einem Schneckenradschaft 40 eingesetzu werden, wobei auf dem Schneckenradschaft 40 neben der Schneckenrad-Verzahnung 41 eine Schnecken-Verzahnung ausgebildet ist. Die Schnecken-Verzahnung dient dann zum Eingreifen in die Verzahnung einer Zahnstange, welche ortsfest in beispielsweise einer am Fahrzeugboden befestigten Schiene angeordnet ist, um das Getriebegehäuse 1 längs der Zahnstange hin und her zu bewegen. In diesem Fall ist der Boden des Getriebegehäuses 1 nach unten hin geöffnet, um den Eingriff der Zahnstange zu ermöglichen, wobei eine solche Zahnstange durch die Schneckenradlager-Zugangsöffnungen 20 führen kann- Insbesondere kann eine solche Zahnstange auch als Widerlager für das Schneckenrad 4 dienen, so dass die Verengung des Abstands der Beine 11 bzw. der Wandungen der Schheckenradlager-Zugangsöffnungen 20 dann nicht geringer als die Größe des Durchmessers d1 des Schneckenradschafts 40 zu sein braucht.

Umsetzbar ist eine Vielzahl weiterer Ausformungen des Getriebegehäuses 1. Beispielsweise kann das Getriebegehäuse 1 aus einem im Wesentlichen quaderförmigen Gehäuse mit einer offenen Bodenwandung und von der Bodenwandung aus vier durch die Seitenwandungen führenden Schneckenlager- bzw. Schneckenradlager-Zugangsöffnungen 15, 20 ausgebildet sein, welche nach oben hin bis zu dem jeweiligen Schneckenlager 14 bzw. Schneckenradlager 19 führen.

Anstelle der Verwendung von elastischen Wandungsmaterialien können auch elastische Übergangsbereiche ausgebildet werden, insbesondere auf Höhe der Schneckenradlager 19 bzw. der Schneckenlager 14, um die nach unten hin führenden seitlichen Wandungen der Schneckenradlager-Zugangsöffnungen 20 bzw. der Schneckenlager-Zugangsöffnungen 15 zum Hindurchschieben des Schneckenradschafts 40 bzw. des Schneckenschafts 30 temporär auseinander zu spreizen.

Als Material für das Getriebegehäuse 1, die Schnecke 3 und das Schneckenrad 4 wird Kunststoff besonders bevorzugt, da eine einfache Fertigung mittels Spritzgussverfahren ermöglicht wird. Prinzipiell möglich ist aber auch die verwendung anderer Materialien, insbesondere Metall zur Fertigung derartiger Getriebe.

Ein derart ausgebildetes Getriebe aus einem solchen Getriebegehäuse 1 mit einer Schnecke 3 und einem Schneckenrad 4 wird beispielsweise in einer Anordnung gemäß Fig. 3 anstelle des dort abgebildeten Getriebes 6 eingesetzt. Dabei wird die Spindel 62 durch die Spindelmutter 42 geführt. Die Antriebswelle 67 des Antriebs 66 wird mit der Antriebswellen-Aufnahme 32 des Schneckenschafts 30 der Schnecke 3 verbunden. Das Antreiben der Antriebswelle 67 mittels des Antriebs 66 führt dadurch zu einer Rotation der Schnecke 3, welche das Schneckenrad 4 in eine entsprechende Rotation versetzt. Durch die miterfolgende Rotation der Spindelmutter 42 wird das Schneckenrad 4 und über dessen Lagerung in den Schneckenradlagern 19 das Getriebegehäuse 1 längs der feststehenden Spindel 62 hin und her bewegt. Zusammen mit dem Getriebegehäuse 1 wird über die Halterung 63 die Oberschiene 61, welche eines der verstellbaren Teile ausbildet, gegenüber der Unterschiene 60, welche das andere der verstellbaren Teile ausbildet, verstellt, so dass ein an der Oberschiene 61 befestigter Sitz relativ zu einem Fahrzeugboden vor- oder zurückverstellt wird.

Gemäß einer alternativen Ausführungsform kann auch das Schneckenrad 4 als oberes Zahnelement in dem Getriebegehäuse 1 oberhalb der Schnecke 3 angeordnet werden.

Insbesondere bei einer Anordnung des Schneckenrads 4 als unteres Zahnelement in dem Getriebegehäuse 1 mit hindurchgeführter Spindel 62 kann auch eine nach unten abschließende Lagerung für den Schneckenradschaft 40 entfallen, wenn die Spindel 62 das Schneckenrad 4 und über das Schneckenrad 4 ggf. auch die Schnecke 3 relativ zu dem Getriebegehäuse 1 nach unten hin in den entsprechenden Lagern 14, 19 hält.

### Bezugszeichenliste:

- 1: Getriebegehäuse
- 10: Oberteil von 1
- 11: Beine/stegförmige Ausleger von 1
- 12: Schneckenraum
- 13: erste Seitenwandungen von 1
- 14: Schneckenlager
- 15: Schneckenlager-Zugangsöffnungen
- 16: Haltesteg in 15
- 17: Schneckenradraum
- 18: zweite Seitenwandungen von 1
- 19: Schneckenradlager
- 20: Schneckenradlager-Zugangsöffnung
- 21: Einführungsabschrägung von 20
- 2: Gehäuseverschlussteil/Deckel
- 22: Lager in 2 für 40
- 23: Bolzenaufnahmen
- 24: Befestigungsbolzen
- 3: Schnecke
- 30: Schneckenschaft
- 31: Schnecken-Verzahnung
- 32: Antriebswellenaufnahme in 30
- X: Schneckenachse
- 4: Schneckenrad
- 40: Schneckenradschaft
- 41: Schneckenrad-Verzahnung
- 42: Spindelmutter
- Y: Schneckenradachse
- d1: Durchmesser von 40
- d2: Abstand gegenüberliegender Wandungen der Schneckenradlager-Zugangsöffnungen 20
- d3: Durchmesser von 30
- d4: Abstand gegenüberliegender Wandungen der Schneckenlager-Zugangsöffnungen 15

## Patentansprüche

1. Getriebe zum Verstellen zweier zueinander verstellbarer Teile (60, 61), insbesondere Fahrzeug-Teile einer Sitzverstelleinrichtung, eines Fensterhebers oder eines Schiebedachs, wobei das erste der Teile (60) eine drehfeste Spindel (62) oder eine feste Zahnstange aufweist und wobei das Getriebe ausgebildet ist mit
- einem Schneckenrad (4, 41), das eine dazu drehfeste Spindelmutter (42) zum Antreiben der Spindel (62) oder eine dazu drehfeste Schnecke zum Antreiben der Zahnstange aufweist,
- einer antreibbaren Schnecke (3, 31) zum Übertragen einer Antriebskraft auf das Schneckenrad (4, 41) und
- einem Getriebegehäuse (1), das die Schnecke (3) und das Schneckenrad (4) gelagert aufnimmt und das mit dem zweiten der Teile (61) in dessen Verstellrichtung verstellfest verbindbar ist, und das Getriebegehäuse (1) aus einem einteiligen Körper ausgebildet ist mit einem Schneckenlager (14) und einem Schneckenradlager (19),
**dadurch gekennzeichnet, dass**
das Schneckenlager (14) in einer oder zwei gegenüberliegenden Wandungen (13) des Getriebegehäuses (1) ausgebildet ist und in Einsetzrichtung der Schnecke (3) eine Schneckenlager-Zugangsöffnung (15) aufweist, wobei die Schneckenlager-Zugangsöffnung (15) durch die entsprechende Seitenwandung (13) bis zu der Unterseite der Seitenwandung (13) und/oder des Getriebegehäuses (1) hindurchführt.

2. Getriebe nach Anspruch 1, bei dem die Schneckenlager-Zugangsöffnung (15) oder ein Abschnitt (16) im Übergangsbereich zwischen der Schneckenlager-Zugangsöffnung (15) und dem Schneckenlager (14) einen geringeren Abstand (d4) als ein Durchmesser (d3) eines Schneckenschafts (30) der Schnecke (3) aufweist.

3. Getriebe nach einem vorstehenden Anspruch, bei dem das Schneckenradlager (19) in einer oder zwei gegenüberliegenden Wandungen (18), insbesondere unterhalb der oberseitigen Schnecke (3), ausgebildet ist und eine Schneckenradlager-Zugangsöffnung (20) aufweist, wobei die Schneckenradlager-Zugangsöffnung (20) durch eine entsprechende Seitenwandung (13) bis zu der Unterseite der Seitenwandung (13) und/oder des Getriebegehäuses (1) hindurchführt.

4. Getriebe nach Anspruch 3, bei dem die Schneckenradlager-Zugangsöffnung (20) oder ein Abschnitt im Übergangsbereich zwischen der Schneckenradlager-Zugangsöffnung (20) und dem Schneckenradlager (19) einen geringeren Abstand (d2) als ein Durchmesser (d1) eines Schneckenradschafts (40) des Schneckenrads (4) aufweist.

5. Getriebe nach Anspruch 1 oder 2 und nach Anspruch 3 oder 4, bei dem die Seitenwandungen (13) mit dem Schneckenlager (14) zwischen den Seitenwandungen (18) mit dem Schneckenradlager (19) ausgebildet sind.

6. Getriebe nach einem vorstehenden Anspruch, bei dem die Seitenwandungen (13, 18) im unterseitigen Abschnitt des Getriebegehäuses (1) aus zueinander beabstandeten Beinen (11) ausgebildet sind, wobei die Abstände zweier benachbarter Beine (11) als Schneckenlager-Zugangsöffnungen (15) zum Durchführen eines Schneckenschafts (30) und/oder als Schneckenradlager-Zugangsöffnungen (20) zum Durchführen eines Schneckenradschafts (40) breit genug und/oder elastisch genug dimensioniert sind.

7. Getriebe nach Anspruch 6 mit einem Gehäuseverschlussteil (2) zum unterseitigen Verschließen des Getriebegehäuses (1), wobei das Gehäuseverschlussteil (2) die Beine (11) nach dem Einsetzen des Gehäuseverschlussteils (2) aneinander festlegt.

8. Getriebe nach einem vorstehenden Anspruch mit einem Gehäuseverschlussteil (2) zum unterseitigen Verschließen des Getriebegehäuses (1), wobei das Gehäuseverschlussteil (2) das Schneckenrad (4) und/oder die Schnecke (3) in dem Getriebegehäuse (1) unterseitig lagert.

9. Getriebe nach einem vorstehenden Anspruch, bei dem zumindest eine innenseitige Seitenwandung (13, 18) zu der Schneckenlager-Zugangsöffnung (15) hin und/oder zu der Schneckenradlager-Zugangsöffnung (20) hin eine Einführungsabschrägung (21) aufweist.

10. Spindel- oder Schneckenantrieb mit einem Getriebe (1, 2, 3) nach einem vorstehenden Anspruch.

11. Fahrzeugsitz mit einem Getriebe (1, 2, 3) nach einem vorstehenden Anspruch.

## Claims

1. Gearing mechanism for adjusting two parts (60, 61) that can be adjusted relative to one another, especially vehicle parts of a seat adjustment device, a window lifter or a sliding roof, wherein the first of the parts (60) has a rotation-proof spindle (62) or a fixed toothed rack, and wherein the gearing mechanism is designed with
- a worm gear (4, 41), which has a spindle nut (42) which is rotation-proof to it, for driving the spindle (62), or a worm screw which is rotation-proof to it, for driving the toothed rack,
- a worm screw (3, 31) that can be driven so as to transfer a driving force to the worm gear (4, 41), and
- a gear housing (1), which holds the worm screw (3) and the worm gear (4) in a supporting manner, and which can be connected immovably to the second of the parts (61) in its adjusting direction, and the gear housing (1) is formed of a single-piece body with a worm screw bearing (14) and a worm gear bearing (19),
**characterised in that**
the worm screw bearing (14) is formed in one or two facing walls (13) of the gear housing (1), and in the mounting direction of the worm screw (3) it has a worm screw bearing access opening (15), with the worm screw bearing access opening (15) extending through the corresponding side wall (13) as far as the underside of the side wall (13) and/or of the gear housing (1).

2. Gearing mechanism according to claim 1, in which the worm screw bearing access opening (15) or a section (16) in the transition area between the worm screw bearing access opening (15) and the worm screw bearing (14) has a smaller spacing (d4) than a diameter (d3) of a worm screw shaft (30) of the worm screw (3).

3. Gearing mechanism according to a preceding claim, in which the worm gear bearing (19) is formed in one or two facing walls (18), in particular below the worm screw (3) above, and has a worm gear bearing access opening (20), with the worm gear bearing access opening (20) extending through a corresponding side wall (13) as far as the underside of the side wall (13) and/or of the gear housing (1).

4. Gearing mechanism according to claim 3, in which the worm gear bearing access opening (20) or a section in the transition area between the worm gear bearing access opening (20) and the worm gear bearing (19) has a smaller spacing (d2) than a diameter (d1) of a worm gear shaft (40) of the worm gear (4).

5. Gearing mechanism according to claim 1 or 2 and according to claim 3 or 4, in which the side walls (13) with the worm screw bearing (14) are formed between the side walls (18) with the worm gear bearing (19).

6. Gearing mechanism according to a preceding claim, in which the side walls (13, 18) in the underside section of the gear housing (1) are designed in the form of two legs (11) at a distance from one another, with the distances between two adjacent legs (11), acting as worm screw bearing access openings (15), being sufficiently wide and/or elastic to allow a worm screw shaft (30) to pass through, and/or acting as worm gear bearing access openings (20), being sufficiently wide and/or elastic to allow a worm gear shaft (40) to pass through.

7. Gearing mechanism according to claim 6, with a housing closure (2) to close off the underside of the gear housing (1), wherein the housing closure (2) affixes the legs (11) to one another after the housing closure (2) is mounted.

8. Gearing mechanism according to a preceding claim, with a housing closure (2) to close off the underside of the gear housing (1), wherein the housing closure (2) supports the worm gear (4) and/or the worm screw (3) in the gear housing (1) from below.

9. Gearing mechanism according to a preceding claim, in which at least one inner side wall (13, 18) has an insertion bevel (21) towards the worm screw bearing access opening (15) and/or towards the worm gear bearing access opening (20).

10. Spindle drive or worm screw drive with a gearing mechanism (1, 2, 3) according to a preceding claim.

11. Vehicle seat with a gearing mechanism (1, 2, 3) according to a preceding claim.

## Revendications

1. Transmission pour régler deux pièces (60, 61) réglables l'une par rapport à l'autre, notamment deux pièces automobiles d'une installation de réglage de siège, un lève-glace ou d'un toit ouvrant, la première des pièces (60) ayant une broche fixe (62) ou une crémaillère fixe, comportant :
- une roue à vis (4, 41) ayant un écrou à vis (42) solidaire en rotation pour entraîner la broche (62) ou une vis solidaire en rotation pour entraîner la crémaillère,
- une vis entraînée (3,31) pour transmettre une force d'entraînement à la roue à vis (4, 41) et
- un boîtier de transmission (1) qui loge la vis (3) et la roue à vis (4) et est solidaire de la seconde pièce (61) de cette installation de réglage, le boîtier de transmission (1) étant formé d'un corps en une seule pièce avec un palier à vis (14) et un palier à roue à vis (19),
**caractérisée en ce que**
le palier à vis (14) est réalisé dans une ou deux parois (12 et 13) du boîtier de transmission (1) et comporte un orifice d'accès (15) au palier à vis dans la direction de mise en place de la vis (3),
l'orifice d'accès (15) au palier à vis (10) passant dans la paroi latérale correspondante (13) pour arriver jusqu'au côté inférieur de la paroi latérale (13) et/ou du boîtier de transmission (1).

2. Transmission selon revendication 1,
dans laquelle
l'orifice d'accès (15) au palier à vis ou un segment (16) de la zone transitoire entre l'orifice d'accès (15) du palier à vis et le palier à vis (14) présente une distance (d4) inférieure au diamètre (d3) de l'axe (30) de la vis (3).

3. Transmission selon l'une des revendications précédentes,
dans laquelle
le palier à vis (19) est réalisé dans l'une ou deux parois latérales opposées (18) notamment sous la vis (3) côté supérieur et présente un orifice d'accès (20) au palier de roue à vis, cet orifice d'accès (20) au palier de roue à vis allant d'une paroi latérale correspondante (13) jusqu'au côté inférieur de la paroi latérale (13) et/ou du boîtier de transmission (1).

4. Transmission selon la revendication 3,
dans laquelle
l'orifice d'accès (20) au palier de roue à vis ou un segment dans la zone transitoire entre l'orifice d'accès (20) du palier de roue à vis et le palier droit à vis (19) présente une distance (d2) inférieure au diamètre (d1) de l'axe (40) de la roue à vis (4).

5. Transmission selon la revendication 1 ou 2 ou les revendications 3 ou 4,
selon laquelle
les parois latérales (13) sont réalisées avec le palier à vis (14) entre les parois latérales (18) ayant le palier à roue à vis (19).

6. Transmission selon l'une des revendications précédentes,
selon laquelle
les parois latérales (13, 18) sont réalisées dans le segment côté inférieur du boîtier de transmission (1) avec des branches (11) écartées les unes des autres, la distance de deux branches voisines (11) comme orifice d'accès (15) au palier de vis étant suffisamment large et/ou suffisamment élastique pour permettre le passage d'un axe de vis (30) et/ou comme orifice d'accès (20) au palier de roue à vis pour le passage d'un axe de roue à vis (40).

7. Transmission selon la revendication 6,
comportant
une partie de fermeture de boîtier (2) pour fermer le côté inférieur du boîtier de transmission (1), la partie de fermeture de boîtier (2) bloquant les branches l'une par rapport à l'autre après sa mise en place dans la partie de fermeture de boîtier (2).

8. Transmission selon l'une des revendications précédentes,
comportant
une partie de fermeture de boîtier (2) pour fermer le coté intérieur du boîtier de transmission (1), la partie de fermeture de boîtier (2) servant de palier côté inférieur à la roue à vis (4) et/ ou à la vis (3) dans le boîtier de transmission.

9. Transmission selon l'une des revendications précédentes,
dans laquelle
au moins une paroi latérale (13, 18) côté intérieur présente une rampe d'introduction (21) vers l'orifice d'accès (15) et/ou vers l'orifice d'accès (20) du palier de roue à vis.

10. Entraînement à broche ou à vis comportant une transmission (1, 2, 3) selon l'une des revendications précédentes.

11. Siège de véhicule équipé d'une transmission (1, 2, 3) selon l'une des revendications précédentes.
